# EUROPÄISCHE PATENTSCHRIFT

(11) **EP 3 315 342 B1**
(45) Veröffentlichungstag und Bekanntmachung des Hinweises auf die Patenterteilung: **08.04.2020**
(21) Anmeldenummer: 17001746.1
(22) Anmeldetag: 24.10.2017
(51) Int. Cl.: B60K 17/08, B60K 17/28, B60K 25/02, B60K 5/02, B60K 17/22, B60K 17/02, B60K 17/342, B60K 17/16, B60K 17/344

(54) **ANTRIEBSEINHEIT FÜR EIN KRAFTFAHRZEUG**
DRIVE UNIT FOR A MOTOR VEHICLE
UNITÉ D'ENTRAÎNEMENT POUR UN VÉHICULE AUTOMOBILE

(30) Priorität: 25.10.2016 DE 102016012710; 10.08.2017 DE 102017007552
(43) Veröffentlichungstag der Anmeldung: 02.05.2018
(73) Patentinhaber: Neander Motors AG, 24143 Kiel (DE)
(72) Erfinder: Claus, Brüstle, 74226 Nordheim (DE); Lutz, W.Lester, 24802 Emkendorf (DE)
(74) Vertreter: Lobemeier, Martin Landolf

(56) Entgegenhaltungen:
- EP-A1- 0 319 747
- DE-A1- 19 515 515
- GB-A- 2 349 417
- JP-A- H02 200 526
- RU-C1- 2 089 739
- US-A1- 2007 144 283

## Beschreibung

Die Erfindung bezieht sich auf eine Antriebseinheit für ein Kraftfahrzeug mit Allradantrieb, das z.B. zum Einsatz in der Agrar- und Bauwirtschafft und/oder für Zivilschutz- und Katastrophenaufgaben ausgebildet ist, nach dem Oberbegriff des Patentanspruchs 1.

Es ist ein Kraftfahrzeug von hoher Geländegängigkeit bekannt, US 3,331,464. Zum Antrieb des Kraftfahrzeugs dient eine Brennkraftmaschine, die zwischen einer Vorderachse und einer Hinterachse angeordnet ist. Die eine Fliehkraftkupplung aufweisende Brennkraftmaschine wirkt mit einer quer zur Fahrzeuglängsrichtung verlaufenden Antriebswelle und einem Winkeltreib auf ein erstes Kegelscheibenpaar eines CVT-Getriebes ein. Dessen zweites Kegelscheibenpaar ist mit einem Getriebe verbunden, das einerseits mit der Hinterachse und andererseits mit der Vorderachse in Wirkverbindung steht, so dass das Kraftfahrzeug vierradgetrieben ist.

Aus der US 2,915,133 geht ein Kraftfahrzeug der Sportwagen- bzw. Rennwagengattung hervor, das zwischen den Radachsen eine Brennkraftmaschine aufweist. Die nahe einer Vorderachse eigebaute Brennkraftmaschine verfügt über V-förmig angeordnete Zylinderreihen, die zur rechten Fahrzeugseite hin schräg verlaufen. Eine in Längsrichtung des Kraftfahrzeugs sich erstreckende Kurbelwelle der Brennkraftmaschine treibt unter Vermittlung von Getrieben die Vorderachse und die Hinterachse an.

Die DE 2 160 430 befasst sich mit einem nach Art eines Traktors ausgebildeten Geräteträger. Eine Brennkraftmaschine treibt die Vorderräder und die Hinterräder an. Dabei ist eine Brennkraftmaschine zwischen einer Vorderachse und einer Hinterachse eingebaut und erste Kardanwelle verbindet die Vorderachse mit der Hinterachse. Eine zweite Kardanwelle erstreckt sich zwischen einem mit der Brennkraftmaschine zusammenwirkenden Getriebe und der Hinterachse. Beide Kardanwellen sind zur Erzielung einer definierten Bodenfreiheit des Geräteträgers seitlich an einem Motorblock der Brennkraftmaschine vorbeigeführt.

Die JP H02 200526 A offenbart ein Kraftfahrzeug mit Allradantrieb, das die Merkmale des Oberbegriffs von Anspruch 1 aufweist.

Aufgabe der Erfindung ist es eine Antriebseinheit für ein Kraftfahrzeug mit Allradantrieb zu konzipieren, durch die ein Kraftfahrzeug vielfältig einsetzbar ist. Dabei sollte aber auch sichergestellt werden, dass die Brennkraftmaschine und Getriebeeinrichtung mit Antriebswellen für Räder von Antriebsachsen der Antriebseinheit sich zum einen mit vertretbarem Aufwand umsetzen lassen und zum anderen durch gute Funktion auszeichnen.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Zusammenwirken der Kurbelwelle des Kurbelwellensystems der Brennkraftmaschine mit dem ersten Kegelscheibenpaar sowie der Antrieb des zweiten Kegelscheibenpaars durch das erste Kegelscheibenpaar wie auch die Beeinflussung der Antriebsachsen durch das zweite Kegelscheibenpaar vorbildliche technische Voraussetzungen für die Antriebseinheit schaffen. Diese zeichnen sich einerseits durch einfache Realisierbarkeit aus. Anderseits ermöglichen sie auch, dass ein so gestaltetes Kraftfahrzeug gerade für den Einsatz in der Agrar- und Bauwirtschaft aber auch bei Zivilschutz- und Katastrophenaufgaben hervorragende Dienste tut ist.

Unterstützt wird dieses Allradkonzept durch die Brennkraftmaschine mit dem zwei Kurbelwellen umfassenden Kurbelwellensystem, welche Kurbelwellen mittels Synchronisationszahnräder in entgegengesetzte Richtungen rotieren. Diese Bauweise bewirkt ausgezeichnete Betriebseigenschaften der Brennkraftmaschine, und zwar bezüglich Laufruhe, Verbrauch und Standfestigkeit. Baulich geschickt gelöst ist, dass der Abtrieb des Kurbelwellensystems hin zum ersten Kegelscheibenpaar von dem ersten Endbereich des Kurbelwellensystems aus erfolgt und dass im zweiten Endbereich des Kurbelwellensystems die Kurbelwellen mit Schwungrädern versehen sind. Hervorzuheben ist in diesem Zusammenhang, dass an wenigstens einer Kurbelwelle eine Zapfwelle zum Antrieb von Nebenaggregaten vorgesehen ist.

Sinnreich ist, dass die zweite Antriebswelle unterhalb eines Zylinderkurbelgehäuses der Brennkraftmaschine verläuft und dass die Brennkraftmaschine zur Vorbeiführung der zweiten Antriebswelle an dem Zylinderkurbelgehäuse schräg zu einer Horizontalen verläuft.

Eine durchdachte Konstruktion ist, dass in eine Triebwelle zwischen dem ersten Endbereich des Kurbelwellensystems und dem ersten Kegelscheibenpaar eine Kupplung geschaltet ist. Sie kann durch eine Schaltkupplung, eine Fliehkraftkupplung oder dgl. gebildet werden. Schließlich ist gestalterisch vorteilhaft, dass die Drehachsen der Kurbelwellen sowie der ersten und zweiten Antriebswellen in Fahrzeuglängsrichtung ausgerichtet sind.

In der Zeichnung wird ein Ausführungsbespiel gezeigt, das nachstehend näher beschrieben wird.

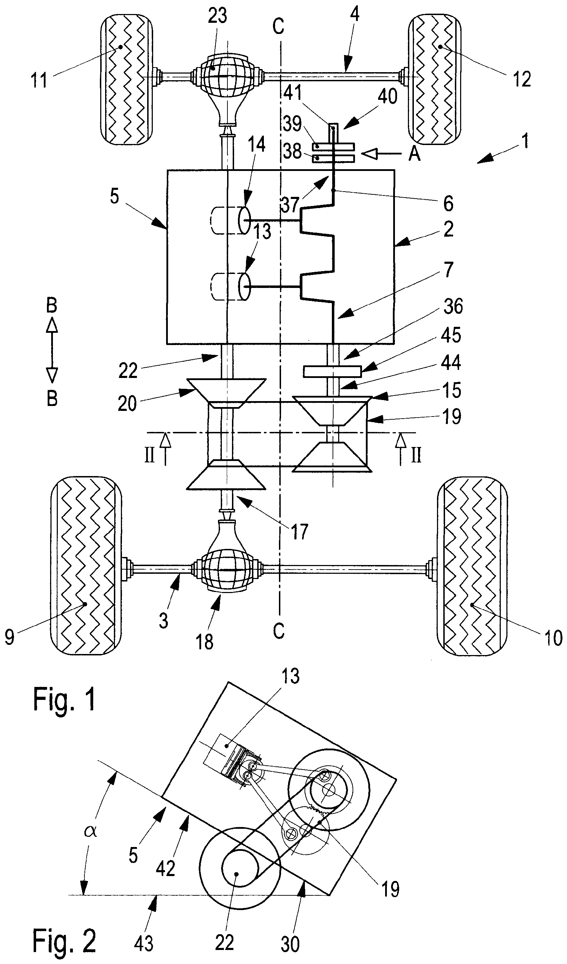

Es zeigen
Fig. 1 eine schematische Ansicht von oben auf die Antriebseinheit, eingebaut in ein Kraftfahrzeug mit Allradantrieb,
Fig. 2 einen schematischen Schnitt etwa nach der Linie II-II der Fig. 1,
Fig. 3 einen schematischen Querschnitt durch die Brennkraftmaschine z.B. nach Fig. 2,

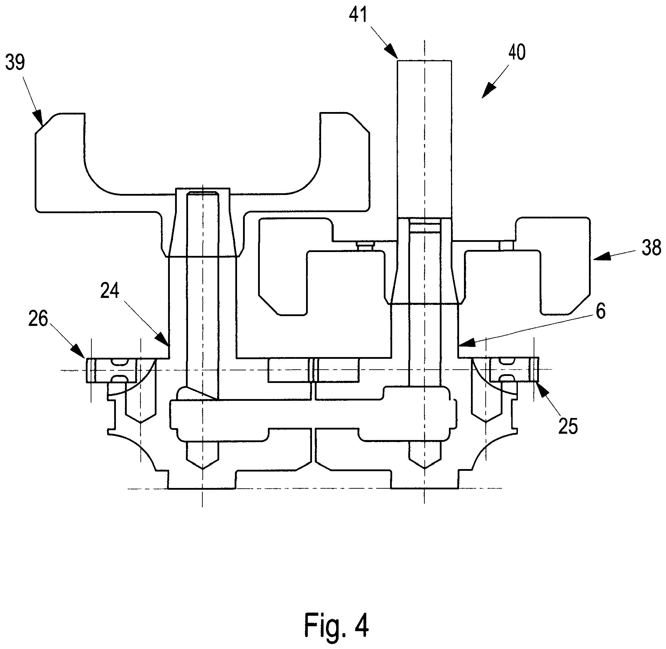

Fig. 4 eine Ansicht in Pfeilrichtung A der Fig. 1.

Ein Kraftfahrzeug 1 mit Allradantrieb ist zum Einsatz in der Agrar- und Bauwirtschaft und/oder für Zivilschutz- und Katastrophenaufgaben geeignet und ist mit einer Antriebseinheit 2 versehen, die zwischen einer ersten Radachse 3 -Hinterachse- und einer zweiten Radachse 4 -Vorderachse- angetrieben wirksam ist, welche Radachsen 3 und 4 in Fahrzeuglängsrichtung B-B mit Abstand zueinander angeordnet sind. Die Antriebseinheit 2 weist eine Brennkraftmaschine 5 der Hubkolbenbauart mit einem zumindest eine horizontal liegende in Fahrzeuglängsrichtung B-B sich erstreckende Kurbelwelle 6 eines Kurbelwellensystems 7 auf. Die Kurbelwelle 6 wirkt auf ein stufenloses Getriebesystem 8, Bauart CVT (Continuously Variable Transmission) ein, die Räder 9, 10 und 11,12 der ersten Radachse 3 und der zweiten Radachse 4 antreibt.

Die Kurbelwelle 6 des Kurbelwellensystems 7 wird von Hubkolben 13, 14 der Brennkraftmaschine 5 in Drehbewegung versetzt und wirkt mit einem ersten Kegelscheibenpaar 15 des Getriebesystems 8 zusammen, das über eine erste Antriebswelle 17 mit einem ersten Differential 18 der ersten Radachse 4 zusammenwirkt. Das erste Kegelscheibenpaar 15 steht unter Vermittlung eines Endlosgliedes 19 in Gestalt eines Schubgliederbands mit einem zweiten Kegelscheibenpaar 20 des Getriebesystems 8 in Wirkverbindung, das unter Zwischenschaltung einer zweiten Antriebswelle 22 ein zweites Differential 23 der zweiten Radachse 4 beeinflusst.

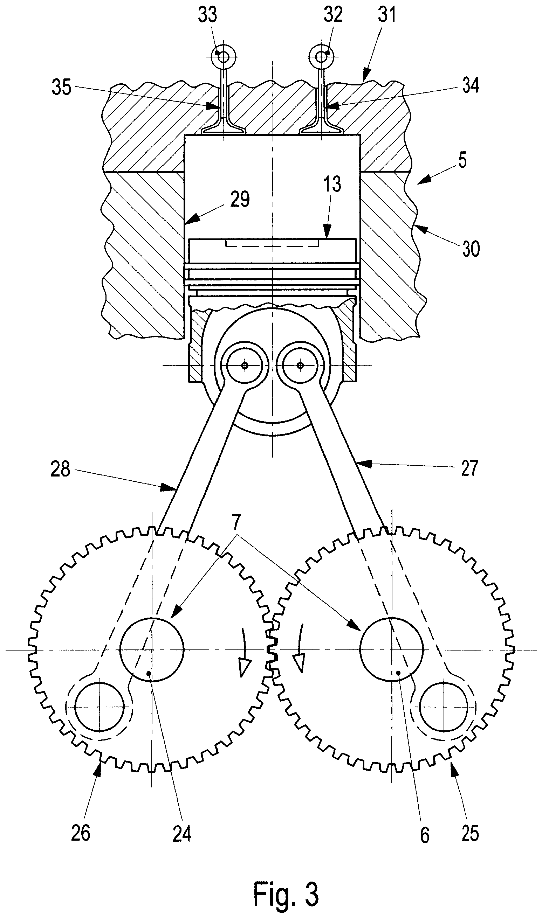

Das Kurbelwellensystem 7 der Brennkraftmaschine 5 umfasst zwei parallele Kurbelwellen, und zwar die bereits zitierte Kurbelwelle 6 und eine weitere Kurbelwelle 24 (Fig. 3). Beide Kurbelwellen 6 und 24 arbeiten mittels Synchronisationszahnräder 25 und 26 zusammen, dergestalt, dass die Kurbelwellen 6 und 24 sich in entgegengesetzten Richtungen drehen. Angetrieben werden die Kurbelwellen 6 und 24 von Pleueln 27 und 28 die jeweils mit einem der Hubkolben 13 und 14 gekoppelt sind. Der Hubkolben 13 bewegt sich ich in einer Bohrung 29 eines Zylinderkurbelgehäuses 30 hin und her, wobei das Zylinderkurbelgehäuse 30 von einem Zylinderkopf 31 abgedeckt, der von Nockenwellen 32, 33 betätigte Gaswechselventile 34 und 35 aufnimmt. Besonders effizient ist diese Brennkraftmaschine 5 dadurch, dass sie im Dieselverfahren arbeitet und mit einer Abgasturboladereinrichtung gegebenenfalls auch mit Direkteinspritzung (System Common Rail) -nicht gezeigt- versehen ist. Eine Brennkraftmaschine dieser Art geht aus der DE 10 2011 104 496 B4 hervor.

Der Abtrieb einer der Kurbelwellen 6 oder 24 des Kurbelwellensystems 7 der Brennkraftmaschine 5 hin zum ersten Kegelscheibenpaar 15 erfolgt von einem ersten Endbereich 36 des besagten Kurbelwellensystems 7 aus. Am vom ersten Endbereich 36 beabstandeten zweiten Endbereich 37 der Kurbelwellensystem 7 bzw. der Kurbelwellen 6 und 24 sind an letzteren Schwungräder 38 und 39 vorgesehen. In axialer Richtung der Kurbelwellen 6 und 24 sind die Schwungräder 38 und 39 versetzt zueinander angeordnet und sie überlappen sich bereichsweise. An zumindest der Kurbelwelle 6 ist eine Verlängerung 40 vorgesehen, die als Zapfwelle 41 zum Antrieb von Nebenaggregaten dient.

Die erste und zweite Antriebswelle 17 und 22 sind in Fahrzeuglängsrichtung B-B ausgerichtet und verlaufen mit symmetrischem oder asymmetrischem Abstand zu einer Mittellängsebene C-C des Kraftfahrzeugs 1. Die zweite Antriebswelle 22 erstreckt sich unterhalb einer äußeren Gehäusewand 42 des Zylinderkurbelgehäuses 30 der Brennkraftmaschine 5, wobei zur Vorbeiführung der zweiten Antriebswelle 22 an dem Zylinderkurbelgehäuse 30 bzw. der Gehäusewand 42 letztere bzw. die Brennkraftmaschine 5 schräg, will heißen im spitzen Winkel α zu einer Horizontalen 43 verläuft. Schließlich ist zwischen dem ersten Endbereich 36 und dem ersten Kegelscheibenpaar eine Triebwelle 44 wirksam, in die eine Kupplung 45 geschaltete ist. Die Kupplung 45 wird durch Schaltkupplung, Fliehkraftkupplung oder dgl. gebildet.

### Bezugszeichenliste

- 1: Kraftfahrzeug
- 2: Antriebseinheit
- 3: erste Radachse
- 4: zweite Radachse
- 5: Brennkraftmaschine
- 6: Kurbelwelle
- 7: Kurbelwellensystem
- 8: Getriebesystem
- 9: Rad, erste Radachse
- 10: Rad, erste Radachse
- 11: Rad, zweite Radachse
- 12: Rad, zweite Radachse
- 13: Hubkolben
- 14: Hubkolben
- 15: erstes Kegelscheibenpaar
- 17: erste Antriebswelle
- 18: erstes Differential
- 19: Endlosglied
- 20: zweites Kegelscheibenpaar
- 22: zweite Antriebswelle
- 23: zweites Differential
- 24: weitere Kurbelwelle
- 25: Synchronisationszahnrad
- 26: Synchronisationszahnrad
- 27: Pleuel
- 28: Pleuel
- 29: Bohrung
- 30: Zylinderkurbelgehäuse
- 31: Zylinderkopf
- 32: Nockenwelle
- 33: Nockenwelle
- 34: Gaswechselventil
- 35: Gaswechselventil
- 36: erster Endbereich
- 37: zweiter Endbereich
- 38: Schwungrad
- 39: Schwungrad
- 40: Verlängerung
- 41: Zapfwelle
- 42: Gehäusewand
- α: Winkel
- 43: Horizontale
- 44: Triebwelle
- 45: Kupplung

## Patentansprüche

1. Kraftfahrzeug (1) mit Allradantrieb, wobei das Kraftfahrzeug (1) aufweist:
- eine als Hinterachse eingerichtete erste Radachse (3) mit daran angeordneten Rädern (9, 10),
- eine von der ersten Radachse (3) in Längsrichtung des Kraftfahrzeugs (1) beabstandet angeordnete, als Vorderachse eingerichtete zweite Radachse (4) mit daran angeordneten Rädern (11, 12),
- eine zwischen der ersten Radachse (3) und der zweiten Radachse (4) angeordnete Antriebseinheit (2) mit einer Brennkraftmaschine (5), wobei die Brennkraftmaschine (5) wenigstens eine horizontal ausgerichtete, sich in Längsrichtung des Kraftfahrzeugs (1) erstreckende Kurbelwelle (6) aufweist, und
- ein mit der Kurbelwelle (6) der Antriebseinheit (2) zusammenwirkendes, die Räder (9, 10) der ersten Radachse (3) und die Räder (11, 12) der zweiten Radachse (4) antreibendes stufenloses Getriebesystem,
wobei
- die Kurbelwelle (6) von wenigstens einem Hubkolben (13, 14) der Brennkraftmaschine (5) in Drehbewegung versetzt wird und mit einem ersten Kegelscheibenpaar (15) des Getriebesystems zusammenwirkt,
- das erste Kegelscheibenpaar (15) des Getriebesystems unter Vermittlung eines Endlosglieds (19) mit einem zweiten Kegelscheibenpaar (20) des Getriebesystems in Wirkverbindung steht,
- das zweite Kegelscheibenpaar (20) über eine erste Antriebswelle (17) mit einem ersten Differential (18) der ersten Radachse (3) und über eine zweite Antriebswelle (22) mit einem zweiten Differential (23) der zweiten Radachse (4) verbunden ist,
**dadurch gekennzeichnet, dass**
sich die zweite Antriebswelle (22) unterhalb einer äußeren Gehäusewand (42) des den wenigstens einen Hubkolben (13, 14) aufnehmenden Zylinderkurbelgehäuses (30) der Brennkraftmaschine (5) erstreckt, wobei die äußere Gehäusewand (42) in einem spitzen Winkel α schräg zur Horizontalen (43) verläuft.

2. Kraftfahrzeug (1) nach Anspruch 1, **dadurch gekennzeichnet, dass** das Kurbelwellensystem der (7) Brennkraftmaschine (5) zwei parallele Kurbelwellen (6, 24) umfasst, die von dem wenigstens einen Hubkolben (13, 14) beeinflusst werden, wobei die Kurbelwellen (6, 24) mittels Synchronisationszahnräder (25, 26) zusammenarbeiten und in entgegengesetzte Richtungen rotieren.

3. Kraftfahrzeug (1) nach Anspruch 2, **dadurch gekennzeichnet, dass** der Abtrieb des Kurbelwellensystems (7) hin zum ersten Kegelscheibenpaar (15) von einem ersten Endbereich (36) des Kurbelwellensystems (7) aus erfolgt.

4. Kraftfahrzeug (1) nach Anspruch 3, **dadurch gekennzeichnet, dass** in einem zweiten Endbereich (37) des Kurbelwellensystems (7) die Kurbelwellen (6) mit Schwungrädern (38, 39) versehen sind.

5. Kraftfahrzeug (1) nach Anspruch 4, **dadurch gekennzeichnet, dass** benachbart des zweiten Endbereichs (37) in Verlängerung wenigstens einer der Kurbelwellen (6, 24) des Kurbelwellensystems (7) eine Zapfwelle (41) vorgesehen ist.

6. Kraftfahrzeug (1) nach Anspruch 3, **dadurch gekennzeichnet, dass** zwischen dem ersten Endbereich (36) des Kurbelwellensystems (7) und dem ersten Kegelscheibenpaar (15) eine Kupplung (45) in eine Triebwelle geschaltet ist.

7. Kraftfahrzeug (1) nach Anspruch 6, **dadurch gekennzeichnet, dass** die Kupplung (45) durch eine Schaltkupplung oder Fliehkraftkupplung gebildet ist.

## Claims

1. Motor vehicle (1) having all-wheel drive, the motor vehicle (1) comprising:
- a first wheel axle (3) designed as a rear axle having wheels (9, 10) arranged thereon,
- a second wheel axle (4) arranged at a distance from the first wheel axle (3) in the longitudinal direction of the motor vehicle (1) and designed as a front axle having wheels (11, 12) arranged thereon,
- a drive unit (2) which is arranged between the first wheel axis (3) and the second wheel axis (4) and has an internal combustion engine (5), the internal combustion engine (5) comprising at least one horizontally oriented crankshaft (6) extending in the longitudinal direction of the motor vehicle (1), and
- a continuously variable transmission system which interacts with the crankshaft (6) of the drive unit (2) and drives the wheels (9, 10) of the first wheel axle (3) and the wheels (11, 12) of the second wheel axle (4),
- the crankshaft (6) being set in rotation by at least one reciprocating piston (13, 14) of the internal combustion engine (5) and interacting with a first pair of conical disks (15) of the transmission system,
- the first pair of conical disks (15) of the transmission system being operatively connected to a second pair of conical disks (20) of the transmission system by means of an endless element (19),
- the second pair of conical disks (20) being connected via a first drive shaft (17) to a first differential (18) of the first wheel axle (3) and via a second drive shaft (22) to a second differential (23) of the second wheel axle (4),
**characterized in that**
the second drive shaft (22) extends below an outer housing wall (42) of the cylinder crankcase (30) of the internal combustion engine (5) which accommodates the at least one reciprocating piston (13, 14), the outer housing wall (42) extending at an acute angle α obliquely to the horizontal (43).

2. Motor vehicle (1) according to claim 1, **characterized in that** the crankshaft system (7) of the internal combustion engine (5) comprises two parallel crankshafts (6, 24) which are influenced by the at least one reciprocating piston (13, 14), the crankshafts (6, 24) cooperating by means of synchronization gearwheels (25, 26) and rotating in opposite directions.

3. Motor vehicle (1) according to claim 2, **characterized in that** the output of the crankshaft system (7) takes place towards the first conical disk pair (15) from a first end region (36) of the crankshaft system (7).

4. Motor vehicle (1) according to claim 3, **characterized in that**, in a second end region (37) of the crankshaft system (7), the crankshafts (6) are provided with flywheels (38, 39).

5. Motor vehicle (1) according to claim 4, **characterized in that** a PTO (41) is provided adjacent to the second end region (37) as an extension of at least one of the crankshafts (6, 24) of the crankshaft system (7).

6. Motor vehicle (1) according to claim 3, **characterized in that**, between the first end region (36) of the crankshaft system (7) and the first conical disk pair (15), a clutch device (45) is connected to a driving shaft.

7. Motor vehicle (1) according to claim 6, **characterized in that** the clutch device (45) is formed by a clutch or centrifugal clutch.

## Revendications

1. Véhicule (1) à quatre roues motrices, le véhicule (1) comportant :
- un premier essieu de roue (3) monté comme essieu arrière avec des roues (9, 10) disposées dessus,
- un second essieu de roue (4) disposé à distance du premier essieu de roue (3) dans le sens longitudinal du véhicule (1) et monté comme essieu avant, avec des roues (11, 12) disposées dessus,
- une unité d'entraînement (2) disposée entre le premier essieu de roue (3) et le second essieu de roue (4) et comportant un moteur à combustion interne (5), le moteur à combustion interne (5) comportant au moins un vilebrequin (6) orienté horizontalement et s'étendant dans le sens longitudinal du véhicule (1), et
- un système de transmission à variation continue coopérant avec le vilebrequin (6) de l'unité d'entraînement (2) et entraînant les roues (9, 10) du premier essieu de roue (3) et les roues (11, 12) du second essieu de roue (4),
dans lequel
- le vilebrequin (6) est mis en rotation par au moins un piston alternatif (13, 14) du moteur à combustion interne (5), et coopère avec une première paire de poulies coniques (15) du système de transmission,
- la première paire de poulies coniques (15) du système de transmission est en liaison fonctionnelle avec une seconde paire de poulies coniques (20) du système de transmission au moyen d'un élément sans fin (19),
- la seconde paire de poulies coniques (20) est reliée, par un premier arbre d'entraînement (17), à un premier différentiel (18) du premier essieu de roue (3) et, par un second arbre d'entraînement (22), à un second différentiel (23) du second essieu de roue (4),
**caractérisé en ce que**
le second arbre d'entraînement (22) s'étend sous une paroi de carter extérieure (42) du carter de vilebrequin de cylindre (30) du moteur à combustion interne (5) qui reçoit l'au moins un piston (13, 14), la paroi de carter extérieure (42) s'étendant selon un angle aigu α en oblique par rapport à l'horizontale (43).

2. Véhicule (1) selon la revendication 1, **caractérisé en ce que** le système de vilebrequins du (7) du moteur à combustion interne (5) comprend deux vilebrequins parallèles (6, 24) qui sont influencés par l'au moins un piston (13, 14), les vilebrequins (6, 24) coopérant au moyen d'engrenages de synchronisation (25, 26) et tournant dans des sens opposés.

3. Véhicule (1) selon la revendication 2, **caractérisé en ce que** la sortie du système de vilebrequins (7) vers la première paire de poulies coniques (15) est réalisée à partir d'une première zone d'extrémité (36) du système de vilebrequins (7).

4. Véhicule (1) selon la revendication 3, **caractérisé en ce que**, dans une seconde zone d'extrémité (37) du système de vilebrequins (7), les vilebrequins (6) sont dotés de volants d'inertie (38, 39).

5. Véhicule (1) selon la revendication 4, **caractérisé en ce qu'**un arbre de prise de force (41) est prévu à côté de la seconde zone d'extrémité (37) dans le prolongement d'au moins l'un des vilebrequins (6, 24) du système de vilebrequins (7).

6. Véhicule (1) selon la revendication 3, **caractérisé en ce qu'**un embrayage (45) est monté dans un arbre d'entraînement entre la première zone d'extrémité (36) du système de vilebrequins (7) et la première paire de poulies coniques (15).

7. Véhicule (1) selon la revendication 6, **caractérisé en ce que** l'embrayage (45) est formé par un embrayage de changement de vitesse ou un embrayage centrifuge.
